(19)

Europäisches
Patentamt

European
Patent Office

Office européen
des brevets

(11) **EP 4 571 351 A1**

(12) **EUROPEAN PATENT APPLICATION**

(43) Date of publication:
**18.06.2025 Bulletin 2025/25**

(21) Application number: **23307191.9**

(22) Date of filing: **13.12.2023**

(51) International Patent Classification (IPC):
**G01S 7/35** *(2006.01)*    **G01S 7/40** *(2006.01)*
**H04B 1/62** *(2006.01)*    **H04B 1/3805** *(2015.01)*

(52) Cooperative Patent Classification (CPC):
**G01S 7/4017; G01S 7/35; H04B 1/0475; H04B 1/62**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NXP B.V.
5656 AG Eindhoven (NL)**

(72) Inventor: **DOARÉ, Olivier Vincent
31880 La Salvetat St Gilles (FR)**

(74) Representative: **Hardingham, Christopher Mark
NXP Semiconductors
Intellectual Property Group
The Cattle Barn
Upper Ashfield Farm, Hoe Lane
Romsey, Hampshire S051 9NJ (GB)**

Remarks:
Amended claims in accordance with Rule 137(2)
EPC.

(54) **METHOD AND DEVICE FOR SELF-CALIBRATING A RADIOFREQUENCY TRANSMITTER**

(57)     A device (100) and method for self-calibrating a radiofrequency transmitter are disclosed, the device comprising: first circuitry (120) for receiving a reference phase value ($\Phi$) and configured to output a first analog signal ($A_I$) based on the reference phase value ($\Phi$); second circuitry (130) for receiving said reference phase value ($\Phi$) and configured to output a second analog signal ($A_Q$) based on the reference phase value ($\Phi$); an IQ modulator (110) coupled to receive an input signal (LO), said first analog signal and said second analog signal, and configured to provide an IQ modulator output signal ($RF_{out}$) based on said input signal, said first analog signal ($A_I$) and said second analog signal ($A_Q$); and compensation control circuitry (150) coupled to receive the IQ modulator output signal ($RF_{out}$) and configured, during calibration, to output at least one compensation signal indicative of a compensation value based on the IQ modulator output signal ($RF_{out}$); wherein at least one of said first circuitry (120) and said second circuitry (130) comprises: a digital signal generating portion (210, 310) for generating a digital signal ($D_I$, $D_Q$) based on the reference phase value ($\Phi$) and at least one said compensation value, a sigma-delta modulator portion (220, 320) coupled to receive the digital signal ($D_I$, $D_Q$) and configured, during calibration, for sigma-delta modulating the digital signal ($D_I$, $D_Q$); and a digital-to-analog converter (230, 330), coupled, during calibration, to receive the modulated digital signal provided by the sigma-delta modulator portion (220, 330) and configured to output said respective first/second analog signal ($A_I$, $A_Q$).

Fig. 1

## Description

FIELD

The present specification relates to a method and device for self-calibrating a radiofrequency transmitter. In particular, but not exclusively, it relates to a method and device for improving the accuracy of phase error compensation in a radiofrequency transmitter.

BACKGROUND

A key parameter for radiofrequency transmitters, for example a radar transmitter, is the phase accuracy from the transmitter.

Some radar systems, for example advanced 77GHz MIMO (multiple-input multiple-output) radar solutions, use an IQ modulator (phase rotator) in the transmitter to shift its phase. MIMO radar is used to improve angular resolution and depends on a virtual array antenna created by a combination of transmitters and receivers. When multiple transmitters are used simultaneously, it is necessary to distinguish between them in the radar post processing. In the case of DDMA (Doppler Division Multiple Access) modulation, this is achieved by encoding each transmitter through rotation of its phase, using the 80GHz phase rotator within the transmitter. This results in a small frequency shift in the Doppler spectrum, enabling the transmitters to be distinguished in the Doppler spectrum.

Transmitter phase accuracy may be degraded by RF impairments (including amplitude and phase imbalance, local oscillator (LO) feedthrough) in the IQ modulator (phase rotator). The resulting phase error may degrade the radar detection, in particular by degrading its image rejection. For example, non-linearities in the phase rotation may create spurs in the Doppler spectrum when using DDMA modulation, or in the range spectrum when using FDMA modulation. These spurs may appear as ghost targets in the radar processing. Compensation of the non-linearity of the phase rotator may be used to reduce the level of the ghost targets.

SUMMARY

Aspects of the present disclosure are set out in the accompanying independent and dependent claims. Combination of features from the dependent claims may be combined with features of the independent claims as appropriate and not merely as set out in the claims.

According to an aspect of the present disclosure, there is provided a device comprising:

first circuitry, for receiving a reference phase value and configured to output a first analog signal based on the reference phase value;
second circuitry, for receiving said reference phase value and configured to output a second analog signal based on the reference phase value;
an IQ modulator coupled to receive an input signal, said first analog signal and said second analog signal, and configured to provide an IQ modulator output signal based on said input signal, said first analog signal and said second analog signal; and
compensation control circuitry coupled to receive the IQ modulator output signal and configured, during calibration, to output at least one compensation signal indicative of a compensation value based on the IQ modulator output signal; wherein at least one of said first circuitry and said second circuitry comprises:

a digital signal generating portion for generating a digital signal based on the reference phase value and at least one said compensation value,
a sigma-delta modulator portion coupled to receive the digital signal and configured, during calibration, for applying sigma-delta modulation to the digital signal; and
a digital-to-analog converter, coupled, during calibration, to receive the modulated digital signal provided by the sigma-delta modulator portion and configured to output said respective first/second analog signal.

IQ modulators, such as phase rotators used in radar applications, typically have RF imperfections or non-linearities that degrade the transmission phase accuracy, thereby introducing a phase error, which may in turn result in a ghost target in the processed radar data. The RF impairments in an IQ modulator may include gain/amplitude imbalance, phase imbalance, and local oscillator (LO) feedthrough. The resulting phase error is a main contributor to degradation of radar image and carrier rejection. Compensation of RF phase imperfections or non-linearities in the IQ modulator can be used to improve detection, in particular by reducing the level of ghost targets and improving radar image rejection. Calibration of the IQ modulator through digital predistortion of the IQ modulator baseband input may improve the linearity of the IQ modulator and decrease the probability of a false target.

The accuracy of the compensation depends on the accuracy of the mechanism for monitoring the phase error. For example, the resolution of the DACs commonly used to control the IQ modulator is typically a limiting factor in the optimization of the phase error. Although the resolution of the DACs may be increased by increasing the number of bits of the DAC, this has an impact on the die size and can lead to increased costs.

Digital delta sigma modulation converts an n-bit digital signal to an m-bit digital signal, where m<n, modulated in time such that its average value is representative of the input. By applying sigma delta modulation to the digital signals input to the DACs controlling the IQ modulator during calibration, the phase rotator output signal may be measured with higher accuracy, enabling more accurate compensation of the RF impairments. In radar applications, this may increase the radar Doppler spectrum dynamic range. During calibration, the compensation may be performed with a higher number of bits. By improving the accuracy of the compensation, the phase error may be reduced and image rejection may be improved, thereby improving the radar performance.

By including a digital sigma delta modulator in front of the DAC during calibration, the resolution of the DAC may be effectively increased without increasing the DAC number of bits, enabling more accurate compensation of rf impairments. By improving the compensation of rf impairments, the present disclosure enables radar performance to be improved for a given DAC resolution. In the same way, the present disclosure may enable the actual resolution of the DAC to be reduced, thereby reducing the area occupied by the DAC, without compromising performance.

Although the example of a radar transmitter is used above, the present disclosure is applicable to any radio-frequency transmitter including an IQ modulator or phase rotator, in particular any IQ system exhibiting gain or phase imbalance or LO feedthrough.

In some embodiments, the delta-sigma modulator portion comprises:

   a sigma-delta modulator configured to apply sigma-delta modulation to a second part of the digital signal; and
   a summing node for summing the modulated second part with a first part of the digital signal.

Applying sigma delta modulation only to the second part of the digital signal may enable a certain SNR (signal to noise ratio) to be maintained in the band of interest.

In some embodiments, the first part is an integer part and the second part is a fractional part of the digital signal.

In some embodiments, the first part comprises the most significant bits of the digital signal, and the second part comprises the least significant bits of the digital signal. In some embodiments, the first part comprises the same number of bits as the digital-to-analog converter.

In some embodiments, the device is selectively operable in:

   a calibration mode, in which the sigma delta modulator is enabled; and
   a transmission mode, in which the sigma delta modulator is disabled or bypassed.

Disabling or bypassing the sigma delta modulator during transmission avoids adding noise to the IQ modulator output signal. The characteristic noise shaping due to the sigma delta modulator may be incompatible with the transmission signal in some applications, in particular some radar systems.

When the device is operating in the transmission mode, the digital signal generating portion may be configured to generate said digital signal based on the reference phase value and said at least one compensation value output by said compensation control circuitry during calibration.

Thereby, even when the sigma-delta modulation is disabled or bypassed during transmission, the phase error on the transmission may still be reduced due to the improved accuracy of the compensation value(s) obtained during calibration.

In some embodiments, the device further comprises a power amplifier coupled to receive the IQ modulator output signal, the power amplifier being configured to amplify the IQ modulator output signal for output to an antenna.

During the calibration mode, the power amplifier may be disabled.

In some embodiments, the compensation control circuitry comprises a power meter coupled to receive the IQ modulator output signal and configured to output a power measurement signal indicative of the power of the IQ modulator output signal, and wherein said at least one compensation value by the compensation control circuitry based on the power measurement signal.

In some embodiments, the compensation control circuitry comprises a low pass filter for removing high frequency noise from the power measurement signal.

In some embodiments, said at least one compensation parameter corresponds to at least one of an amplitude adjustment, a phase offset and a dc offset of the respective digital signal.

In some embodiments, said compensation control circuitry is configured to determine said at least one compensation value based on the IQ modulator output signal by iteratively updating the respective compensation value.

In some embodiments, said compensation control circuitry is configured to determine said at least one compensation value based on the IQ modulator output signal by performing at least one respective binary search.

In some embodiments the compensation control circuitry is further configured to determine from the IQ modulator output signal a signal component path of the IQ modulator having the highest gain, and wherein said at least one compensation value comprises an amplitude adjustment of the respective digital signal corresponding to the signal component path having the highest gain.

Said amplitude adjustment may decrease the amplitude of the respective digital signal with respect to a predetermined initial amplitude.

For example, if the first and second analog signals respectively control the in-phase signal component path and the quadrature-phase signal component path of the IQ modulator, and the in-phase signal component path is determined to have the highest gain, then the amplitude of the respective digital signal used for generating the first analog signal may be reduced with respect to its initial value, while the amplitude of the digital signal used for generating the second analog signal retains its initial value, and vice versa. This may be helpful in avoiding saturating the DAC.

In some embodiments, the or each compensation parameter is stored by said first and/or second circuitry or said digital controller.

For example, the compensation parameter(s) may be stored in a digital register, a flip-flop, or other memory element.

In some embodiments, a phase error on the IQ modulator output signal is less than or equal to 1 degree.

According to a further aspect of the disclosure, there is provided a radiofrequency transmitter, comprising:

a device according to the first aspect defined above; and
a transmission antenna coupled to the output of the IQ modulator.

In some embodiments, the radiofrequency transmitter is a radar transmitter.

According to a further aspect of the disclosure, there is provided a method for self-calibrating an IQ modulator, the method comprising:

generating a first digital signal and a second digital signal based on a reference phase value and at least one compensation value;
applying sigma-delta modulation to each of the first and second digital signals; and
converting the modulated first digital signal and the modulated second digital signal to a first analog signal and a second analog signal respectively;
generating, by the IQ modulator, an IQ modulator output signal based on a radiofrequency input signal, said first analog signal and said second analog signal; and
monitoring the IQ modulator output signal as a function of the reference phase value; and
updating said at least one compensation value based on the monitored IQ modulator output signal.

In some embodiments, the first digital signal corresponds to $A*A_{comp}*\cos(\Phi+\Phi_{comp})+DC_{comp\_I}$ where $\Phi$ is the reference phase value, $A$ is an initial amplitude, and said at least one compensation value comprises $A_{comp}$, $\Phi_{comp}$ and $DC_{comp\_I}$, and optionally the second digital signal corresponds to $A*\sin(\Phi)+DC_{comp\_Q}$ and said at least one compensation value further comprises the value $DC_{comp\_Q}$.

In some embodiments, the second digital signal corresponds to $A*A_{comp}*\sin(\Phi+\Phi_{comp})+DC_{comp\_Q}$ where $\Phi$ is the reference phase value, $A$ is an initial amplitude, and said at least one compensation value comprises the values $A_{comp}$, $\Phi_{comp}$ and $DC_{comp\_Q}$, and optionally the first digital signal corresponds to $A*\cos(\Phi)+DC_{comp\_I}$ and said at least one compensation value further comprises the value $DC_{comp\_I}$.

In some embodiments, applying sigma-delta modulation to the first/second digital signal comprises:

dividing the first/second digital signal into first and second parts;
applying delta-sigma modulation to the second part of the first/second digital signal; and
summing the modulated second part with the first part of the first/second digital signal.

In some embodiments, determining said at least one compensation value based on the IQ modulator output signal comprises determining said at least one compensation value based on a measurement of the power of the IQ modulator output signal as a function of the phase reference value.

In some embodiments, determining said at least one compensation value based on the IQ modulator output signal comprises averaging or applying a low-pass filter to a measurement of the IQ modulator output signal.

In some embodiments, said at least one compensation value comprises at least one of an amplitude adjustment, a phase offset and a dc offset of the first digital signal.

In some embodiments, said method further comprises:

determining from the IQ modulator output signal a signal component path of the IQ modulator having the highest gain;
wherein determining said at least one compensation value based on the IQ modulator output signal comprises determining a compensation value for adjusting an amplitude of the respective digital signal corresponding to the signal component path having the highest gain.

In some embodiments, said method further comprises storing said at least one compensation value.

In some embodiments, determining said at least one compensation value based on the IQ modulator output signal comprises iteratively updating the respective compensation value.

In some embodiments, determining said at least one compensation value based on the IQ modulator output signal comprises at least one respective binary search.

BRIEF DESCRIPTION OF THE DRAWINGS

Figure 1 illustrates a device according to an example embodiment of this disclosure;
Figure 2 schematically illustrates an example IQ modulator for use in the device of the example embodiment of Figure 1; and
Figure 3 shows a flowchart illustrating a method for calibrating an IQ modulator according to an example embodiment.

DETAILED DESCRIPTION

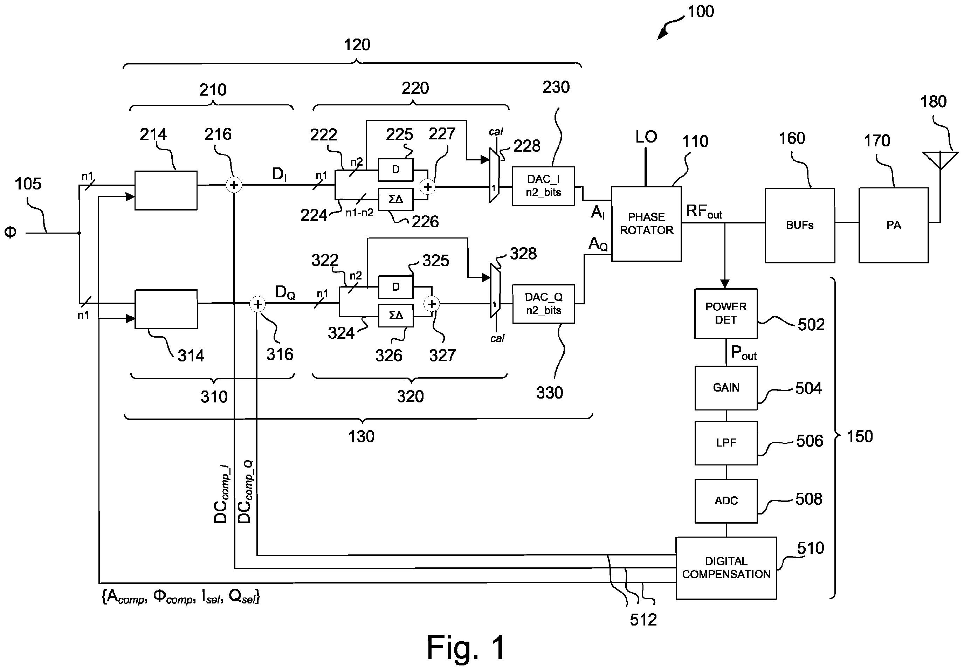

Figure 1 schematically illustrates a device 100 according to an example embodiment of this disclosure. The device 100, in the form of a radiofrequency transmitter, includes a first input 105 for receiving a reference phase value $\Phi$, a phase rotator 110, first circuitry 120, second circuitry 130, compensation control circuitry 150, buffers 160, a power amplifier 170 and a radar antenna 180.

The radio-frequency phase rotator 110, in the form of an IQ modulator 110, is controlled by a first analog signal $A_I$ and a second analog signal $A_Q$, for the I and Q paths respectively. The IQ modulator 110 also receives an input signal in the form of a local oscillator signal LO and generates an output signal $RF_{out}$ based on the local oscillator signal LO, the first analog signal $A_I$ and the second analog signal $A_Q$. The phase of the output signal $RF_{out}$ is controlled by the first and second analog signals $A_I$ and $A_Q$.

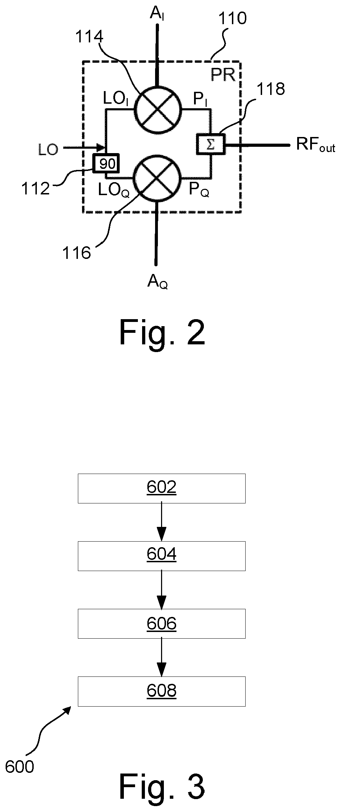

Figure 2 schematically illustrates an example IQ modulator 110 for use in the device 100. The input signal LO received by the IQ modulator 110 is split into an in-phase (I) component LOI, which is substantially in phase with the received input signal, and a quadrature-phase (Q) component LOQ, which acquires a phase shift at block 112 so that it is substantially 90 degrees out of phase with the received input signal LO. A first mixer 114 receives the in-phase component LOI and the first analog signal $A_I$ and outputs a first signal component $P_I$ being the product of the in-phase component LOI and the first analog signal $A_I$. A second mixer 116 receives the quadrature-phase component LOQ and the second analog signal $A_Q$ and outputs a second signal component $P_Q$ being the product of the in-phase component LOQ and the first analog signal $A_Q$. An adder 118 receives and first and second signal components $P_I$ and $P_Q$ and outputs the IQ modulator output signal $RF_{out}$ being the sum of the first and second signal components $P_I$ and $P_Q$.

The IQ modulator output signal $RF_{out}$ is coupled via a buffer 160 (for example, a series of buffers) to a power amplifier 170 for amplifying the output signal $RF_{out}$ for output to the radar antenna 180.

The first analog signal $A_I$ is generated by the first circuitry 120, which is coupled to the first input 105 for receiving the reference phase value $\Phi$ and is configured to output a first analog signal $A_I$, based on the reference phase value $\Phi$. The second analog signal $A_Q$ is generated by the second circuitry 130, which is coupled to the first input 105 for receiving said reference phase value $\Phi$ and is configured to output a second analog signal $A_Q$, based on the reference phase value $\Phi$.

For an ideal IQ modulator (phase rotator), the first and second analog signals may be described by $A_I = A*\cos(\Phi)$ and $A_Q = A*\sin(\Phi)$ respectively, where A is a common amplitude and $\Phi$ is the reference phase value received at the first input 105, such that the phase of the IQ modulator output signal $RF_{out}$ corresponds to the reference phase value $\Phi$.

However, a real IQ modulator 110 has phase and gain imperfections (i.e., phase and gain imbalances), and also LO feedthrough, leading to non-linearities in the behaviour of the IQ modulator 110 which can lead to a phase error at the IQ modulator output signal $RF_{out}$. To optimize the phase error due to the RF imperfections of the IQ modulator 110, the compensation control circuitry 150 is used to monitor and compensate the phase error by providing feedback from the output of the power rotator 110 to the first circuitry 120 and/or second circuitry 130, which generate the respective first analog signal $A_I$ and second analog signal $A_Q$ for controlling the IQ modulator 110. The compensation control circuitry 150 is coupled to receive the IQ modulator output signal $RF_{out}$ and is configured to output at least one compensation signal 512 indicative of a compensation value based on the IQ modulator output signal $RF_{out}$. The compensation values are used to pre-distort the analog signals $A_I$, $A_Q$ used to control the IQ modulator 110, for example by adjusting an amplitude, phase offset and/or dc offset of one or both of the analog signals $A_I$, $A_Q$. In this way, the device 100 compensates RF imperfections of the IQ modulator 110. Accordingly, the first and second analog signals $A_I$, $A_Q$ may be described more generally by $A_I = A_1*\cos(\Phi + \Phi_1) + DC_1$ and $A_Q = A_2*\sin(\Phi + \Phi_2) + DC_2$, where $\Phi$ is the reference phase value received at the first input 105, $A_1$, $\Phi_1$ and $DC_1$ are respectively an amplitude, phase offset and dc offset of the first analog signal, and $A_2$, $\Phi_2$ and $DC_2$ are respectively an amplitude, phase offset and dc offset of the second analog signal. The amplitude, phase offset and dc offset of each signal may be determined or adjusted by the compensation signals received, by the first and second circuitry 120, 130, from the compensation control circuitry 150. In this example embodiment, the compensation values indicated by the compensation signals 512 output by the compensation control circuitry 150 include an amplitude adjustment $A_{comp}$ and a phase offset $\Phi_{comp}$ for compensating gain imbalance and phase imbalance respectively, and dc offsets $DC_{comp\_I}$ and $DC_{comp\_Q}$ for compensating LO feedthrough on the two paths.

The first circuitry 120 comprises a first digital signal generating portion 210, a first sigma-delta modulation portion 220, and a first digital-to-analog converter (DAC) 230. The first digital signal generating portion 210 generates a first digital signal $D_I$ corresponding to $A_1*\cos(\Phi + \Phi_1) + DC_1$, based on the reference phase value $\Phi$ and the compensation values indicated by the compensation signals 512 received from the compensation control circuitry 150. The first sigma-delta modulation portion 220 applies sigma-delta modulation to the first digital signal $D_I$. The first DAC 230 is coupled to the output of the sigma-delta modulation portion 220 for selectively receiving one of a modulated first digital signal or an unmodulated portion of the first digital signal, and to output the first analog signal $A_I$ for controlling the I (in-phase) branch of the IQ modulator 110. The first analog signal $A_I$ is an analog signal having an amplitude corresponding to the first digital signal.

Similarly, the second circuitry 130 comprises a second digital signal generating portion 310, a second sigma-delta modulation portion 320 and a second digital-to-analog converter (DAC) 330. The second digital signal generating portion 210 generates a second digital signal $D_Q$ corresponding to $A_2*\sin(\Phi + \Phi_2) + DC_2$, based on the reference phase value $\Phi$ and the compensation values indicated by the compensation signals 512 received from the compensation control circuitry 150. The second sigma-delta modulation portion 320 for applies sigma-delta modulation to the second digital signal $D_Q$. The second DAC 330 is coupled to the output of the second sigma-delta modulation portion 320 for selectively receiving one of a modulated second digital signal or an unmodulated portion of the second digital signal, and to output the second analog signal $A_Q$ for controlling the Q (quadrature-phase) branch of the IQ modulator 110. The second analog signal $A_Q$ is an analog signal having an amplitude corresponding to the second digital signal.

Each of the first digital signal generating portion 210 and the second digital signal generating portion 310 comprises a CORDIC 214, 314 for generating $A_1*\cos(\Phi + \Phi_1)$ and $A_2*\sin(\Phi + \Phi_2)$ respectively. Each CORDIC 214, 314 is coupled to receive as inputs the reference phase value $\Phi$ and compensation signals 512 indicative of the compensation values $A_{comp}$ (gain imbalance compensation), $\Phi_{comp}$ (phase imbalance compensation) and path selection control parameters $I_{sel}$ and $Q_{sel}$, the purpose of which will be described below. In other embodiments, a LUT (look up table) or other means may be used instead of a CORDIC. For each signal path, the respective dc offset $DC_1$, $DC_2$ may be applied after the CORDIC, by summing the output of the CORDIC 214, 314 with a signal representing the required offset. In this example embodiment, the first digital signal generating portion 210 comprises a summing node 216 arranged to receive the output of the respective CORDIC 214 and a compensation signal 512 indicative of the compensation value $DC_{comp\_I}$. The second digital signal generating portion 310 comprises a summing node 316 arranged to receive the output of the respective CORDIC 314 and a compensation signal 512 indicative of the compensation value $DC_{comp\_Q}$.

The first delta-sigma modulation portion 220 is configured to split the first digital signal $D_I$ into first 222 and second 224 parts, apply delta-sigma modulation to the second part 224 of the first digital signal $D_I$, and sum the modulated second part 224 with the first part 222 of the first digital signal. The first delta-sigma modulator portion 220 comprises a delay element 225, a digital sigma-delta modulator 226, a summing node 227 and a mode selector 228. The sigma-delta modulator 226 receives the first (e.g., fractional) part 224 of the first digital signal $D_I$ and applies sigma-delta modulation to this first part 224. The delay element 225 receives the second (e.g., integer) part 222 of the first digital signal $D_I$ and applies a delay to this second part 222 equivalent to the delay of the sigma-delta modulator 226. The delayed first part output by the delay element 225 is recombined with the sigma-delta modulated second part output by the sigma-delta modulator 226 at the summing node 227. The modulated first digital signal output of the sigma-delta modulation portion 220 is therefore a digital signal, of which the most significant bit or bits are unmodulated and the least significant bit or bits are modulated in time.

The mode selector 228, in the form of a multiplexer, is coupled to receive the recombined sigma-delta modulated first digital signal output by the summing node 227, the first part 222 of the unmodulated first digital signal $D_I$, and a mode control signal cal. During calibration of the device, the mode control signal cal is ON (e.g., high) and the mode selector 228 outputs the recombined sigma-delta modulated first digital signal to the first DAC 230. During transmission, the mode control signal *cal* is OFF (e.g., low) and the mode selector 228 outputs the first part 222 of the unmodulated first digital signal $D_I$ to the first DAC 230.

The first DAC 230 therefore selectively receives either the recombined digital signal or the unmodulated first part 222 of the first digital signal $D_I$ from the first sigma delta modulation portion 220, depending on the state of the mode control signal cal.

Similarly, the second delta-sigma modulator portion 320 is configured to split the second digital signal $D_Q$ into first 322 and second 324 parts, apply delta-sigma modulation to the second part 324 of the second digital signal $D_Q$, and sum the modulated second part 324 with the first part 322 of the second digital signal. The second delta-sigma modulator portion 320 comprises a delay element 325, a digital sigma-delta modulator 326, a summing node 327 and a mode selector 328. The sigma-delta modulator 326 receives the first (e.g., fractional) part 324 of the second digital signal $D_Q$ and applies sigma-delta modulation to this first part 324. The delay element 325 receives the second (e.g., integer) part 322 of the second digital signal $D_Q$ and applies a delay to this second part 322 equivalent to the delay of the sigma-delta modulator 326. The delayed first part output by the delay element 325 is recombined with the sigma-delta modulated second part output by the sigma-delta modulator 326 at the summing node 327. The mode selector 328, in the form of a multiplexer, is coupled to receive the recombined sigma-delta modulated second digital signal output by the summing node 327, the first part 322 of the unmodulated second digital signal $D_Q$, and the mode control signal cal. During calibration, the mode control signal ca/is ON (e.g., high) and the mode selector 328 outputs the recombined sigma-delta modulated second digital signal to the second DAC 330. During transmission, the mode control signal *cal* is OFF (e.g., low) and the mode selector 328 outputs the first part 322 of the unmodulated second digital signal $D_Q$ to the second DAC 330.

The second DAC 330 therefore selectively receives either the recombined digital signal or the unmodulated first part 322 of the second digital signal $D_Q$ from the second sigma delta modulation portion 320.

The digital sigma-delta modulators 226, 326 may be provided in the form of a simple MASH (multi-stage noise shaping) structure of order 3 or 4, but other architectures of sigma-delta modulator may be used.

In this example embodiment, each of the first and second digital signals $D_I$, $D_Q$ comprises n1 bits and each of the first and second DACs 230, 330 is a n2-bit DAC, where n2<n1. In the example embodiment shown in Figure 1, the first part 222, 322 of the respective first and second digital signals $D_I$, $D_Q$ comprises n2 bits and the second part 224, 324 comprises n1-n2 bits. For example, the first part 222, 322 may be an integer part and the second part 224, 324 may be a fractional part of the respective first/second digital signal. Thus, during calibration, the compensation may be applied using a higher number of bits than the DAC resolution. In turn, this enables the IQ modulator output signal to be monitored with greater accuracy, increasing the accuracy of the compensation.

Operation of the digital delta sigma modulators 226, 326 increases the accuracy of the compensation and thereby reduces the phase error, but also introduces high frequency noise on the IQ modulator output signal $RF_{out}$. To avoid degradation of the noise on the transmission, the device 100 is selectively operable in a calibration mode (*cal*=1), in which the first and second sigma delta modulator portions 220, 320 are enabled, and a transmission mode (ca/=0), in which the first and second sigma delta modulators 226, 326 are bypassed or otherwise disabled. That is, the digital sigma delta modulators 226, 326 are activated during calibration of the phase error/image rejection to improve accuracy of the compensation but are de-activated or bypassed during transmission to avoid adding unwanted noise to the transmitted radar signal. As a result, the input signals to the DACs 230, 330 depend on the mode (calibration or transmission). In addition, during operation in the calibration mode, the power amplifier 170 may be disabled so that transmission is not active. In the compensation control circuitry 150, the noise on the monitored IQ modulator output signal $RF_{out}$ arising from operation of the sigma delta modulators 226, 326 may be mitigated, for example by digital averaging and/or by use of a low pass filter 506.

During transmission, there may be some small degradation of the IQ modulator output signal due to truncation or rounding of the n1-bit digital signals ($D_I$, $D_Q$) to match the n2-bit resolution of the DACs (230, 330). Nonetheless there is an overall improvement (reduction) in the phase error on the transmission, due to application of the more accurate compensation determined during calibration.

The compensation control circuitry 150 comprises a detector 502, an amplifier 504, a low pass filter 506, an analog-to-digital converter (ADC) 508 and a digital controller 510. In this example embodiment, the detector 502 is provided in the form of a power meter 502 for monitoring the power of the signal $RF_{out}$ output by the IQ modulator 110. For an ideal IQ modulator with no imperfections, the output power is constant, independent of the applied phase rotation $\Phi$. The rf imperfections in the IQ modulator 110 result in a variation of the power of the IQ modulator output signal $RF_{out}$ with the reference phase value $\Phi$. That is, a variation in the power of the output signal $RF_{out}$ of the IQ modulator 110 is observed when different phase rotations are applied to the RF signal. In this example embodiment, the compensation control circuitry 150 determines the compensation values based on the power measurement signal $P_{out}$ output by the power meter 502, by adjusting the compensation values until the variation of $P_{out}$ is optimized. The power meter 502 is coupled to receive the output signal $RF_{out}$ of the IQ modulator 110 and is configured to output a power measurement signal $P_{out}$ indicative of the power of the IQ modulator output signal $RF_{out}$. The power meter 502 may comprise, for example, an RMS detector or a peak power detector. For example, the power meter 502 may be configured to measure variations of the power of the IQ modulator output signal $RF_{out}$. In this example embodiment, the power meter 502 is configured to measure the delta variation of the power of the IQ modulator output signal $RF_{out}$ as a function of the programmed phase value $\Phi$.

The amplifier 504 is coupled to receive the power measurement signal $P_{out}$ output by the power meter 502 and to amplify the power variations measured by the power meter 502. The amplifier 504 may be provided in the form of a VGA (variable gain amplifier) so that small power variations can be amplified and re-centred to occupy the full range of the ADC 508, by controlling a variable gain and offset of the amplifier 504. The low-pass filter 506 is coupled to the output of the amplifier 504 and is configured to remove the high frequency noise arising from the first and second sigma delta modulators 226, 326. In alternative embodiments, digital averaging may be used instead of the low-pass filter 506 to remove this high-frequency noise, although this would require a longer calibration time. The ADC 508 is coupled to receive the output of the low-pass filter 506 and to translate the information to the digital controller 510.

The digital controller 510 is configured to interpret the information from the ADC 508 and to generate optimum compensation for the amplitude, phase and dc offset of the first and/or second analog signals $A_I$, $A_Q$. In this example embodiment, the compensation values indicated by the compensation signals 512 output by the compensation control circuitry 150 include an amplitude adjustment $A_{comp}$ and a phase offset $\Phi_{comp}$ for compensating gain imbalance and phase imbalance respectively, and dc offsets $DC_{comp\_I}$ and $DC_{comp\_Q}$ for compensating LO feedthrough on the two paths. The compensation signals 512 also include path selection control parameters $I_{sel}$ and $Q_{sel}$.

During calibration, the power of the IQ modulator output signal $RF_{out}$ is monitored as a function of the reference phase value $\Phi$. The values of the amplitude $A_1$, phase offset $\Phi_1$ and/or dc offset $DC_1$ of the first digital signal $D_I$ and/or the amplitude $A_2$, phase offset $\Phi_2$ and/or dc offset $DC_2$ of the second digital signal $D_Q$ are iteratively updated until the delta variation of the IQ modulator output power is considered as minimum or below a desired upper limit.

In a first example, the compensation is applied by modifying the amplitude $A_1$, phase offset $\Phi_1$ and dc offset $DC_1$ used for generating the first digital signal $D_I$, and the dc offset $DC_2$ of the second analog signal $D_Q$. To compensate for LO feedthrough on each of the I and Q paths of the IQ modulator 110, compensation is applied to the respective dc offsets $DC_1$ and $DC_2$ of the two paths. Before calibration, the input offset for both I and Q paths is zero, that is $DC_1=DC_2=0$. During calibration, the digital controller 510 iteratively updates a dc offset compensation value $DC_{comp\_I}$ which modifies the dc offset $DC_1$ of the first digital signal $D_I$ to be $DC_1= DC_{comp\_I}$, until the power meter output indicates an optimal (small) delta variation. For example, at each iteration the output power may be measured for two different values of the reference phase $\Phi$, the delta variation of the measured power indicating whether the compensation needs to be increased or decreased. Next, the digital controller 510 iteratively updates a dc offset compensation $DC_{comp\_Q}$ which modifies the dc offset $DC_2$ of the second digital signal $D_Q$ to be $DC_2=DC_{comp\_Q}$, until the power meter output indicates an optimal delta variation. Before calibration, the input gain of the DACs 230, 330 is controlled by an initial amplitude value A, i.e., $A_1=A_2=A$. During calibration, to compensate a gain imbalance in the IQ modulator 110, the digital controller 510 iteratively updates a gain compensation value $A_{comp}$ which modifies the amplitude $A_1$ of the first digital signal to be $D_1= A*A_{comp}$, until the delta variation measured by the power meter 502 is in a desired or optimal range, i.e., the delta variation is small. Before calibration the input phase of the DACs 230, 330 is controlled purely by the reference phase parameter $\Phi$, corresponding to the desired phase rotation of the LO signal. That is the phase offset is zero, $\Phi_1= \Phi_2=0$. During calibration, to compensate a phase imbalance in the IQ modulator 110, the digital controller 510 iteratively updates a phase compensation $\Phi_{comp}$ which modifies the phase offset of the first digital signal $D_I$ to be $\Phi_1= \Phi_{comp}$, until the until the delta variation measured by the power meter 502 is in a desired or optimal (small) range. For each of the calibrations (dc offset (path I), dc offset (path Q), amplitude adjustment, phase offset), the respective optimum compensation value ($DC_{comp\_I}$, $DC_{comp\_Q}$, $A_{comp}$, $\Phi_{comp}$) may be found using a binary search, although the skilled person will appreciate that other techniques may be used.

In the above example, the dc offsets are calibrated first, followed by the gain imbalance and the phase imbalance. The order in which the above calibrations are performed may be different from the default order (that is, dc offset (path I), then dc offset (path Q), then amplitude adjustment, then phase offset) set out above.

In the example above, the first and second digital signals before calibration are:

I path:

$$D_I= A*\cos(\Phi)$$

Q path:

$$D_Q= A*\sin(\Phi).$$

The compensation of the gain and phase imbalances may be applied to only one path (I or Q), whereas the dc offset compensation is applied to both I and Q paths. In the example above, in which the amplitude and phase offset compensation is applied only to the first or I (in-phase) path 120, the first and second digital signals following calibration are:

I path:

$$D_I = A^*A_{comp}{}^*cos(\Phi + \Phi_{comp}) + DC_{comp\_I}$$

Q path:

$$D_Q = A^*sin(\Phi) + DC_{comp\_Q}.$$

Alternatively, if amplitude and phase offset compensation is applied only to the second or Q (quadrature-phase) path 130, the first and second digital signals following calibration would be:

I path:

$$D_I = A^*cos(\Phi) + DC_{comp\_I}$$

Q path:

$$D_Q = A^*A_{comp}{}^*sin(\Phi + \Phi_{comp}) + DC_{comp\_Q}$$

The digital controller 510 may be configured to determine to which path (I or Q) the compensation is to be applied. For example, the digital controller 510 may be configured to determine which of the I and Q paths shows the highest gain at the output of the IQ modulator 110, and to select this path only for gain compensation. By applying negative gain adjustment to the path showing the highest gain, saturation of the DAC can be avoided. In the example embodiment shown in Figure 1, this may be implemented using the path selection control parameters $I_{sel}$, $Q_{sel}$, which take the values $I_{sel}$=1, $Q_{sel}$=0 when the I signal component path has the highest gain at the IQ modulator output, and $I_{sel}$=0, $Q_{sel}$=1 when the Q signal component path has the highest gain, and configuring the CORDICs 214, 314 such that the compensated first and second digital signals are:

$$D_I = A^*(I_{sel}{}^*A_{comp} + Q_{sel})^*cos(\Phi + I_{sel}{}^*\Phi_{comp}) + DC_{comp\_I}$$

$$D_Q = A^*(Q_{sel}{}^*A_{comp} + I_{sel})^*sin(\Phi + Q_{sel}{}^*\Phi_{comp}) + DC_{comp\_Q}$$

The compensation values $DC_{comp\_I}$, $DC_{comp\_Q}$, $A_{comp}$, $\Phi_{comp}$ may be stored by the first and/or second circuitry 120, 130 or by the digital controller 510. For example, the compensation values may be stored in a digital register, a flip-flop, or other memory element within the device 100.

The calibration may be repeated prior to each transmission by the device 100. Each time the calibration is performed, the first and second digital signals are reinitialised at the default settings, in this example $D_I = A^*cos(\Phi)$, $D_Q = A^*sin(\Phi)$. This may be done by setting the compensation parameters to $DC_{comp\_I}$ =0, $DC_{comp\_Q}$ =0, $A_{comp}$=1

Figure 3 shows a flowchart of a method 600 for self-calibrating an IQ modulator according to an example embodiment. The method 600 comprises steps 602 to 608. At step 602, a first digital signal (DI, DQ) is generated, based on a reference phase value ($\Phi$) and at least one compensation value ($A_{comp}$, $\Phi_{comp}$ $DC_{comp\_I}$, $DC_{comp\_I}$) and a second digital signal (DI, DQ) is generated, based on a reference phase value ($\Phi$). At step 604, sigma-delta modulation is applied to each of the first and second digital signals (DI, DQ). At step 604, the modulated first digital signal and the modulated second digital signal are converted to a first analog signal and a second analog signal respectively. At step 606, an IQ modulator output signal ($RF_{out}$) is generated by the IQ modulator, based on a radiofrequency input signal (LO), said first analog signal ($A_I$) and said second analog signal ($A_Q$). At step 608, at least one compensation value ($A_{comp}$, $\Phi_{comp}$ $DC_{comp\_I}$, $DC_{comp\_I}$) is updated, based on the IQ modulator output signal ($RF_{out}$).

In the example embodiments described above, the compensation in phase, gain and/or DC offset is performed digitally. That is, the first and second digital signals $D_I$, $D_Q$, are computed through CORDIC (or alternatively through LUT). The first and second digital signals $D_I$, $D_Q$, can be implemented using a high number of bits during calibration, greater than the number of bits of the respective DACs 230, 330, giving a high accuracy on the compensation.

In known radar systems, the DAC resolution is mainly determined by DAC number of bits, which limits the measurement of the variation in the IQ modulator power measured by the power meter 502. The DAC resolution thus introduces an error on the measurement output power by the power meter 502, which does not allow an optimized compensation of the gain and phase parameters.

In the present disclosure, this limitation due to the DAC resolution is circumvented by including a digital sigma delta modulator 226, 326 in front of each respective DAC 230, 330. This increases the effective DAC resolution during calibration, which in turn increases the accuracy with which the phase error may be estimated and thereby further compensated. With a better accuracy on the measurement of the error due to the introduction of the sigma delta modulators 226, 326, the device 100 according to the present disclosure enables the optimum compensation to be determined. Even though the sigma-delta modulation is bypassed during transmission, such that the higher resolution compensation is quantified by the lower resolution DAC, the effect of the more accurate compensation is still an improvement relative to the compensation that would be determined in the absence of the sigma-delta modulation.

Based on simulations of the calibration process described above in the device 100 (repeated for 10000 different combinations of LO feedthrough value, gain imbalance, phase imbalance and DAC mismatch/linearity), a maximum phase error of 1 degree or less can be reached using the device according to the present disclosure. This corresponds to a maximum spurs level of 40dBc after calibration. Even in the worst-case scenario, the phase error Is divided by a factor of 2. Simulations also indicate that the performance of a radar system using an 8-bits DAC system without sigma delta modulation is equivalent to that of a 7-bit DAC system incorporating sigma delta modulation as disclosed above. Accordingly, the present disclosure enables reduction of die area of the device without reducing the performance of the device. For example, the die area would be reduced by a factor of 2 by reducing the resolution of the DACs from 8-bits to 7-bits in combination with introducing the sigma delta modulation as disclosed above.

Although the compensation control circuitry 150 of the device 100 of the example embodiment described above with reference to Figure 1 is based on monitoring and reducing variations in the power of the IQ modulator output signal, the skilled person will appreciate that other compensation techniques may be used, while benefitting from the improvement provided by the sigma delta modulation disclosed herein. Non-linearities in the IQ modulator output signal may be detected through techniques other than by monitoring power variations as described above. As an example, the required compensation may be determined by down-mixing the output signal, digitizing the down-mixed signal and analyzing the spectral content of the signal by performing a Fast Fourier Transform on the digitized baseband signal to identify the level of each type of RF impairment through its spectral signature. The compensation values may then be adjusted to optimize the level of each RF impairment.

Although particular example embodiments of this disclosure have been described, it will be appreciated that many modifications, additions and/or substitutions may be made within the scope of the claims.

**Claims**

1. A device for self-calibrating a radiofrequency transmitter, comprising:

    first circuitry for receiving a reference phase value and configured to output a first analog signal based on the reference phase value;
    second circuitry for receiving said reference phase value and configured to output a second analog signal based on the reference phase value;
    an IQ modulator coupled to receive an input signal, said first analog signal and said second analog signal, and configured to provide an IQ modulator output signal based on said input signal, said first analog signal and said second analog signal; and
    compensation control circuitry coupled to receive the IQ modulator output signal and configured, during calibration, to output at least one compensation signal indicative of a compensation value based on the IQ modulator output signal;
    wherein at least one of said first circuitry and said second circuitry comprises:

       a digital signal generating portion for generating a digital signal based on the reference phase value and at least one said compensation value,
       a sigma-delta modulator portion coupled to receive the digital signal and configured, during calibration, for applying sigma-delta modulation to the digital signal; and
       a digital-to-analog converter, coupled, during calibration, to receive the modulated digital signal provided by the sigma-delta modulator portion and configured to output said respective first/second analog signal .

2. A device according to claim 1, wherein the delta-sigma modulator portion comprises:

    a sigma-delta modulator configured to apply sigma-delta modulation to a second part of the digital signal; and

a summing node for summing the modulated second part with a first part of the digital signal.

3. A device according to any one of the preceding claims, wherein the first part is an integer part and the second part is a fractional part of the respective digital signal.

4. A device according to any one of the preceding claims, wherein the device is selectively configurable between:

a calibration mode, in which the sigma delta modulator portion is enabled; and
a transmission mode, in which the sigma delta modulator portion is disabled or bypassed.

5. A device according to claim 4, wherein, when the device is operating in the transmission mode, the digital signal generating portion is configured to generate said digital signal based on the reference phase value and said at least one compensation value output by said compensation control circuitry during calibration.

6. A device according to any one of the preceding claims, further comprising a power amplifier coupled to receive the IQ modulator output signal, the power amplifier being configured to amplify the IQ modulator output signal for output to an antenna.

7. A device according to claim 6, wherein, during the calibration mode, the power amplifier is disabled.

8. A device according to any one of the preceding claims, wherein the compensation control circuitry comprises a power meter coupled to receive the IQ modulator output signal and configured to output a power measurement signal indicative of the power of the IQ modulator output signal, and wherein said at least one compensation value is determined by the compensation control circuitry based on the power measurement signal.

9. A device according to claim 8, wherein the compensation control circuitry comprises a low pass filter for removing high frequency noise from the power measurement signal.

10. A device according to any one of the preceding claims, wherein said at least one compensation parameter corresponds to at least one of an amplitude adjustment, a phase offset and a dc offset of the respective digital signal.

11. A device according to any one of the preceding claims, wherein the compensation control circuitry is further configured to determine from the IQ modulator output signal a signal component path of the IQ modulator having the highest gain, and wherein said at least one compensation value includes an amplitude adjustment of the respective digital signal corresponding to the signal component path having the highest gain.

12. A device according to claim 11, wherein said amplitude adjustment decreases the amplitude of the respective digital signal with respect to a predetermined initial amplitude.

13. A device according to any one of the preceding claims, wherein said or each compensation parameter is stored by said first and/or second circuitry or said digital controller.

14. A radiofrequency transmitter, comprising:

a device according to any one of claims 1 to 13; and
a radiofrequency transmission antenna coupled to the output of the IQ modulator.

15. A method for self-calibrating an IQ modulator, the method comprising:

generating a first digital signal and a second digital signal based on a reference phase value and at least one compensation value;
applying sigma-delta modulation to each of the first and second digital signals; and
converting the modulated first digital signal and the modulated second digital signal to a first analog signal and a second analog signal respectively;
generating, at the IQ modulator, an IQ modulator output signal based on a radiofrequency input signal, said first analog signal and said second analog signal; and
determining said at least one compensation value based on the IQ modulator output signal.

**Amended claims in accordance with Rule 137(2) EPC.**

1. A device for self-calibrating a radiofrequency transmitter, comprising:

   first circuitry (120) for receiving a reference phase value and configured to output a first analog signal based on the reference phase value;
   second circuitry (130) for receiving said reference phase value and configured to output a second analog signal based on the reference phase value;
   an IQ modulator (110) coupled to receive an input signal, said first analog signal and said second analog signal, and configured to provide an IQ modulator output signal ($RF_{out}$) based on said input signal, said first analog signal and said second analog signal; and
   compensation control circuitry (150) coupled to receive the IQ modulator output signal and configured, during calibration, to output at least one compensation signal indicative of a compensation value based on the IQ modulator output signal;
   wherein at least one of said first circuitry and said second circuitry comprises:

   a digital signal generating portion (210) for generating a digital signal based on the reference phase value and at least one said compensation value,
   a sigma-delta modulator portion (220) coupled to receive the digital signal and configured, during calibration, for applying sigma-delta modulation to the digital signal;
   a digital-to-analog converter (230), coupled, during calibration, to receive the modulated digital signal provided by the sigma-delta modulator portion and configured to output said respective first/second analog signal; and

   wherein the device is selectively configurable between:
   a calibration mode, in which the sigma delta modulator portion is enabled; and
   a transmission mode, in which the sigma delta modulator portion is disabled or bypassed.

2. A device according to claim 1, wherein the delta-sigma modulator portion comprises:

   a sigma-delta modulator (226) configured to apply sigma-delta modulation to a second part of the digital signal; and
   a summing node (227) for summing the modulated second part with a first part of the digital signal.

3. A device according to claim 2, wherein the first part is an integer part and the second part is a fractional part of the respective digital signal.

4. A device according to any preceding claim, wherein, when the device is operating in the transmission mode, the digital signal generating portion is configured to generate said digital signal based on the reference phase value and said at least one compensation value output by said compensation control circuitry during calibration.

5. A device according to any one of the preceding claims, further comprising a power amplifier (170) coupled to receive the IQ modulator output signal, the power amplifier being configured to amplify the IQ modulator output signal for output to an antenna.

6. A device according to claim 5, wherein, during the calibration mode, the power amplifier is disabled.

7. A device according to any one of the preceding claims, wherein the compensation control circuitry comprises a power meter (502) coupled to receive the IQ modulator output signal and configured to output a power measurement signal indicative of the power of the IQ modulator output signal, and wherein said at least one compensation value is determined by the compensation control circuitry based on the power measurement signal.

8. A device according to claim 7, wherein the compensation control circuitry comprises a low pass filter (506) for removing high frequency noise from the power measurement signal.

9. A device according to any one of the preceding claims, wherein said at least one compensation signal corresponds to at least one of an amplitude adjustment, a phase offset and a dc offset of the respective digital signal.

10. A device according to any one of the preceding claims, wherein the compensation control circuitry is further configured to determine from the IQ modulator output signal a signal component path of the IQ modulator having the highest gain, and wherein said at least one compensation value includes an amplitude adjustment of the respective digital signal corresponding to the signal component path having the highest gain.

11. A device according to claim 10, wherein said amplitude adjustment decreases the amplitude of the respective digital signal with respect to a predetermined initial amplitude.

12. A device according to any one of the preceding claims, wherein said or each compensation signal is stored by said first and/or second circuitry or said digital controller.

13. A radiofrequency transmitter, comprising:

   a device according to any one of claims 1 to 13; and
   a radiofrequency transmission antenna coupled to the output of the IQ modulator.

Fig. 1

Fig. 2

Fig. 3

Europäisches
Patentamt

European
Patent Office

Office européen
des brevets

# EUROPEAN SEARCH REPORT

**Application Number**

EP 23 30 7191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/095607 A1 (HUANG XINPING [CA] ET AL) 22 May 2003 (2003-05-22) * paragraph [0023]; figures 2,3 * | 1-15 | INV. G01S7/35 G01S7/40 |
| A | US 2009/033538 A1 (WINKLER VOLKER [DE]) 5 February 2009 (2009-02-05) * paragraph [0039]; figure 2 * | 1-3,14, 15 | ADD. H04B1/62 H04B1/3805 |
| X | US 2022/196791 A1 (DOARÉ OLIVIER VINCENT [FR] ET AL) 23 June 2022 (2022-06-23) * abstract; figure 3 * | 1-15 | |
| X | US 2010/099363 A1 (FAUST ROI [IL] ET AL) 22 April 2010 (2010-04-22) * figure 1 * | 1-15 | |
| X | US 2022/196796 A1 (FIORE VINCENZO [AT]) 23 June 2022 (2022-06-23) * paragraph [0062] – paragraphs [0064], [0089]; figure 6 * | 1-15 | |
| A | KALYONCU ILKER ET AL: "A Phase-Calibration Method for Vector-Sum Phase Shifters Using a Self-Generated LUT", IEEE TRANSACTIONS ON CIRCUITS AND SYSTEMS I: REGULAR PAPERS, IEEE, US, vol. 66, no. 4, 1 April 2019 (2019-04-01), pages 1632-1642, XP011715387, ISSN: 1549-8328, DOI: 10.1109/TCSI.2018.2885172 [retrieved on 2019-03-15] * the whole document * | 1-15 | TECHNICAL FIELDS SEARCHED (IPC) G01S H04B |

The present search report has been drawn up for all claims

| Place of search | Date of completion of the search | Examiner |
|---|---|---|
| Munich | 3 April 2024 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 571 351 A1

## ANNEX TO THE EUROPEAN SEARCH REPORT
## ON EUROPEAN PATENT APPLICATION NO.

EP 23 30 7191

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2024

| Patent document cited in search report | Publication date | Patent family member(s) | Publication date |
|---|---|---|---|
| US 2003095607 A1 | 22-05-2003 | CA 2407960 A1 <br> US 2003095607 A1 | 16-04-2003 <br> 22-05-2003 |
| US 2009033538 A1 | 05-02-2009 | DE 102008033988 A1 <br> US 2009033538 A1 | 05-02-2009 <br> 05-02-2009 |
| US 2022196791 A1 | 23-06-2022 | CN 114660608 A <br> EP 4020002 A1 <br> EP 4020003 A1 <br> US 2022196791 A1 | 24-06-2022 <br> 29-06-2022 <br> 29-06-2022 <br> 23-06-2022 |
| US 2010099363 A1 | 22-04-2010 | NONE | |
| US 2022196796 A1 | 23-06-2022 | CN 114646960 A <br> DE 102021132346 A1 <br> US 2022196796 A1 | 21-06-2022 <br> 23-06-2022 <br> 23-06-2022 |

EPO FORM P0459

For more details about this annex : see Official Journal of the European Patent Office, No. 12/82